# EUROPEAN PATENT SPECIFICATION

(11) **EP 3 879 994 B1**
(45) Date of publication and mention of the grant of the patent: **21.08.2024**
(21) Application number: 19805262.3
(22) Date of filing: 14.11.2019
(51) Int. Cl.: A23G 9/32, A23G 9/42, A23G 9/48, A23D 9/007

(54) **FROZEN CONFECTIONERY COMPRISING A COATING COMPOSITION AND PROCESS FOR PRODUCING THE COATING COMPOSITION**
GEFRORENE SÜSSWAREN MIT EINER BESCHICHTUNGSZUSAMMENSETZUNG UND VERFAHREN ZUR HERSTELLUNG DER BESCHICHTUNGSZUSAMMENSETZUNG
CONFISERIE CONGELÉE COMPRENANT UNE COMPOSITION D'ENROBAGE ET PROCÉDÉ DE FABRICATION DE LA COMPOSITION D'ENROBAGE

(30) Priority: 15.11.2018 US 201862767871 P
(43) Date of publication of application: 22.09.2021
(73) Proprietor: Société des Produits Nestlé S.A., 1800 Vevey (CH)
(72) Inventor: AEBI, Marcel, Bakersfield, CA 93311 (US); PALURI, Sravanti, Bakersfield, CA 93313 (US); NAPOLITANO, Guillermo, E, Dublin, OH 43017 (US); CHANDRASEKARAN, Shantha Nalur, Bakersfield, California 93311 (US)
(74) Representative: Slaven, John William
(86) International application number: PCT/EP2019/081408
(87) International publication number: WO 2020/099602

(56) References cited:
- WO-A1-2017/055520
- WO-A1-2018/134376
- WO-A1-2018/224534
- CN-A- 103 875 883
- JP-A- S57 181 648
- US-A- 1 796 825
- US-A- 1 883 484
- US-A- 3 819 839

## Description

### Field of the invention

The present invention relates to a frozen confectionery comprising a coating having a coating composition comprising, expressed in weight % (based on the total weight of the coating), 40 - 60 wt. %, preferably 43 - 60 wt. %, more preferably 45 - 50 wt. % of total fat in the coating, 30 - 50 wt. % of ground whole nuts having a particle size below 80 microns, preferably 10 - 73 microns, and wherein the total fat in the coating composition comprises 40 - 60 wt.% of liquid fat and 60 - 40 wt. % of hardening fat based on the total fat, the coating composition has a solid fat content of 30 - 50 % at 0°C and comprises 10 - 20 wt. % non-fat milk solids. The invention also relates to a method for making the coating composition.

### Background

Coated frozen confections are products, which are highly appreciated by consumers.

Texture and nutritional profile of the coating are drivers for consumer preference.

Traditional ice cream coatings are chocolate based and use hard fats like cocoa butter to achieve the desired functionality of viscosity, setting and texture. Chocolate-based coatings may be decorated with nut pieces in the form of inclusions to provide flavor and a crunchy texture. These kind of coatings usually has a high level of saturated fatty acids (SFA).

Nut-based coating exist in confectionary but use only the nut meat and not the oil. This is because the oil is too soft and has a very low melting point. Applying the nut-based coating used in confectionary to a frozen confection raises a number of difficulties due to the soft products surface. For example, solidification of the coating has required a long setting time. Furthermore, packing the product without influencing coating appearance has been difficult.

Peanut butter is a well-known spread for bread etc. The peanut butter comprises milled nuts and hydrogenated oils to provide stability to the spread.

US3819839 discloses a method of preparing nut-based coating compositions comprising a blend of nuts and a broad range of fats, and to confections and dairy products coated therewith. It relates to edible coating compositions and more particularly to nut-based coating fats having unique properties rendering such coating fats particularly useful in the coating of confections, frozen dairy products and the like.

US1796825 discloses a coating for cakes and pastries comprising comminuted nut, flavoring elements, and a hard fat, said ingredients providing a hard product but meltable for its application in cakes and the like.

US1883484 discloses a continuous coating for ice cream or frozen milk products. The product is soft but not flowing at room temperature. The product may contain small discrete chopped pieces of nut.

WO2018224534 discloses a composition for coating frozen confection comprising, expressed in weight % based on the total weight of the coating, 5 - 65 wt. % particles comprising an amorphous continuous phase having a glass transition temperature of at least 40°C, and the particles having a closed porosity of 10 - 60%, and 25 - 85 wt. % added fat, and 0 - 55 wt. % non-fat particles.

In frozen confections, there is a need for a coating with soft sensation or texture when consumed frozen. Furthermore, the coating needs to be usable on standard coating /dipping equipment used in industrial ice cream production. The coating also needs to set sufficiently before the product can be packed.

There is also a need for a healthy fat coating with low levels of saturated fatty acids.

There is a need to overcome at least some of the aforementioned problems and provide frozen confectionery coatings with desirable rheological properties in form of the setting properties whilst maintaining desired organoleptic properties of a "ganache".

### Object of the invention

It is thus the object of present invention to provide a frozen confectionery comprising a coating having a coating composition comprising, expressed in weight % (based on the total weight of the coating), 40 - 60 wt. %, preferably 43 - 60 wt. %, more preferably 45 - 50 wt. % of total fat in the coating, 30 - 50 wt. % of ground whole nuts having a particle size below 80 microns, preferably 10 - 73 microns, and wherein the total fat in the coating composition comprises 40 - 60 wt.% of liquid fat and 60 - 40 wt. % of hardening fat based on the total fat, the coating composition has a solid fat content of 30 - 50 % at 0°C and comprises 10 - 20 wt. % non-fat milk solids.

A second object of the present invention is to provide a process for producing the coating composition for frozen confectionery with acceptable processing characteristics.

### Summary of the invention

The invention relates to a frozen confectionery comprising a coating having a coating composition comprising, expressed in weight % (based on the total weight of the coating),
40 - 60 wt. %, preferably 43 - 60 wt. %, more preferably 45 - 50 wt. % of total fat in the coating,
30 - 50 wt. % of ground whole nuts having a particle size below 80 microns, preferably 10 - 73 microns, and
wherein the total fat in the coating composition comprises 40 - 60 wt. % of liquid fat and 60 - 40 wt. % of hardening fat based on the total fat, the coating composition has a solid fat content of 30 - 50 % at 0°C and comprises 10 - 20 wt. % non-fat milk solids.

The present invention avoids the problems associated with nut-based coatings that are too hard or do not set properly on frozen confections and provides a fat based coating, which can be pre-manufactured and stored for use as needed.

It has been found that the coating has a good texture due to the mixture of solid and liquid material in the coating composition.

The coating of the frozen confectionery according to the invention has a soft sensation and taste similar to peanut butter with an option to have crunchy/grainy or creamy texture. In comparison to standard compound coatings used in frozen desserts with a snappy and crisp texture the present invention of peanut butter was found to be significantly more soft and chewy by a sensory panel.

According to a second aspect, the invention relates to a process for producing the coating composition, which can be applied on frozen confections with standard equipment, setting in acceptable time to a degree good enough for handling and packaging in a standard industrial line. The process for producing a coating composition as discussed above and in the claims comprises the steps:
providing ground whole nut,
providing the non-fat solids, the hardening fat, and the liquid oil,
melting the hardening fat,
mixing non-fat solids with the at least part of the melted hardening fat and obtaining a mixture of fats, oils and non-fat solids, resulting in a paste,
refining the mixture of fats, oils and non-fat solids by milling to reduce the particle size, preferably to a particle size below 80 microns, preferably below 40 to 15 microns
adding remaining fats and oils to the refined mixture and
optionally adding emulsifier to the refined mixture and/or the mixture with fats and oils.

The invention also related to a frozen confectionery comprising a coating having a coating composition comprising, expressed in weight % (based on the total weight of the coating),
40 - 60 wt. %, preferably 43 - 60 wt. %, more preferably 45 - 50 wt.% of total fat in the coating,
30 - 50 wt. % of ground whole nuts having a particle size below 80 microns, preferably 10 - 73 microns, and providing 23 - 61wt. % of the total fat in the coating composition and
77 - 39 wt. % of the total fat not originating from the ground whole nuts, which together with the fat from the ground nuts provides the total fat in the coating composition, and
wherein the total fat in the coating composition comprises 45 - 55% of liquid fat and 55 - 45 wt. % of hardening fat based on the total fat.

### Brief description of the drawings

Figure 1 shows the solid fat content (%) for temperatures between -40° C and 40 °C for fat-based coating composition according the invention compared with other coatings.
Figures 2(a) and 2(b) show respectively the texture profile with time in a single penetration test at -22°C and its peak hardness value (force, g) for fat-based coating according the invention compared with other coatings.
Figures 3(a) and 3(b) show respectively the texture profile with time in a single penetration test at -22°C and its peak hardness value (force, g) for fat-based coating according the invention compared with a coating containing nuts that does not set.

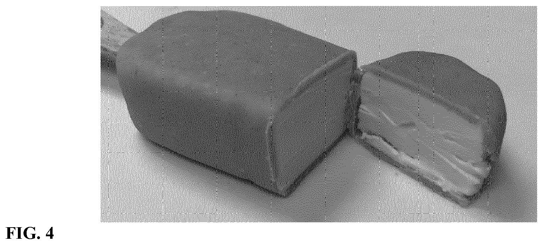

Figure 4 is a picture of a frozen confection according to the invention.

### Detailed description of the invention

In a preferred embodiment of the invention, the frozen confectionery comprises a coating composition comprising ground whole nuts providing 23 - 61 wt. % of the total fat in the coating composition and
77 - 39 wt. % of the total fat not originating from the ground whole nuts together with the fat from the ground nuts providing the total fat in the coating composition.

Advantageously, in frozen confectionery according to the invention, the total fat in the coating composition comprises 45 - 55 wt. % of the liquid fat and 55 - 45 wt. % of hardening fat based on the total fat.

Without wishing to be bound by theory, it is believed that ground whole nuts, for example, peanuts, between 30-50 wt. % of the coating provides the necessary liquid oil to obtain the desired texture of a ganache type coating. On the other hand, the 77-39 wt.% of fat (based on the total fat) not originating from the ground nuts (preferably including milk fat, palm oil and its fractions, and emulsifier.

The frozen confectionery comprises a coating having a coating composition comprising, expressed in weight % (based on the total weight of the coating),
40 - 60 wt. %, preferably 43 - 60 wt. %, more preferably 45 - 50 wt.% of total fat in the coating,
30 - 50 wt. % of ground whole nuts having a particle size below 80 microns, preferably 10 - 73 microns, and providing 23- 61 wt. % of the total fat in the coating composition and
77- 39 wt. % of the total fat not originating from the ground whole nuts, which together with the fat from the ground nuts provides the total fat in the coating composition, and
wherein the total fat in the coating composition comprises 40 - 60 wt.% of liquid fat and 60 - 40 wt. % of hardening fat based on the total fat.

The above-mentioned coating composition may be based on peanuts.

Normally a coating formulated to be soft (such as a coating with soybean oil) would be too soft and would not set quickly enough in standard industrial filling / dipping line resulting in smear and uneven/drip covering of the surface. Further, the coating composition may not adhere sufficiently to the surface of the frozen product. Typically, the blend of oils used in a conventional coating is formulated to achieve a solid fat index of ~70 at 0°C to be a good coating, and this coating will be hard and brittle and will not have the needed soft texture.

The coating composition of the frozen confectionery of the present invention comprises a fat blend with vegetable fat (preferably palm), with high content of liquid oil, preferably peanut oil. Additionally the blend may optionally comprise milk fat which due to its wide range of melting fractions provides textural benefit.

The coating composition of the frozen confectionery of the present invention comprises 14 - 45 wt. % non-fat solids not coming from the nuts and 15 - 26 wt. % non-fat solids coming from the nuts based on the total coating weight. This provides a coating which is desirably nut-forward in flavor while being process friendly in standard conditions.

It has been found that when the total fat in the coating composition comprises 40 - 60 wt% of liquid fat and 60 - 40 wt. % of hardening fat based on the total fat provides a coating which shows good organoleptic and processing characteristics. A preferred coating composition with these properties comprises 45 - 55 wt. % of liquid fat and 55-45 wt. % of hardening fat.

In a particular preferred embodiment of the coating composition the total fat in the coating composition comprises 50% liquid oil and 50% hardening fat.

Advantageously, in the coating composition fat not originating from the ground nuts comprises 16 - 0 wt. % liquid oil and 30 - 20 wt. % of hardening fat based on total coating weight. This provides a desired ratio of liquid and hardening fat.

In a preferred embodiment of the coating composition, the coating composition comprises ground nuts combined with palm oil or coconut oil or a combination thereof.

In one embodiment the coating composition of the frozen confectionery of the invention is free from hydrogenated oil.

It is preferred that the coating material is maintained at 32 - 46°C to retain the optimal viscosity for regulating the pick-up weight and to enable a uniform and smooth coating on the finished product The coating composition of the frozen confectionery of the invention typically sets well enough to be wrapped in approximately 15 - 60 seconds, preferably in approximately 15-30 seconds.

In the present context, the term "ground" means a reduction to fine particle size by grinding, milling, crushing, pounding and breaking up

In the present context, "whole nut" or "whole nuts" including "Peanuts" are the kernel or seed of their respective family of trees and plants without the flesh or shell and with or without skin and / or germ / heart

It is preferred that the ground whole nuts are selected from the group consisting of culinary nuts such as peanuts, almonds, brazil nuts, cashews, hazelnuts, pecans, walnuts, macadamia nuts, pistachio nuts, chest nuts, and mixtures thereof.

Examples of typical oil content in nuts are given in the table below:

| Nut | Total Fat wt. % | SFA |
|---|---|---|
| Almond | 53 | 4 |
| Black Walnut | 59 | 3 |
| Brazil Nuts | 67 | 25 |
| Cashew | 46 | 9 |
| Hazelnut | 61 | 4 |
| Macadamia | 76 | 12 |
| Peanuts | 49 | 6 |
| Pistachio | 46 | 6 |

The nut-based coating composition of the frozen confectionery of the invention comprises 40 - 60 wt% of fat. This range of fat content is preferred, as it contributes to achieve appropriate viscosity and preferred thickness of coating in frozen confections, e.g. 0.4 - 4 mm thick.

The coating composition of the frozen confectionery of the invention comprises 50 - 60 wt% of non-fat solids. The non-fat solids are preferably selected from the group consisting of sugar, salt, cocoa, fibers, milk solids non-fat and one or more flavors. The non-fat solids provide structure, flavour and colour to the coating.

The coating composition comprises 10 - 20 wt. % non-fat milk solids.

The coating composition may comprise 5 - 45 wt. % sugar.

In the present context, the fat or fat phase includes the fat in nuts, vegetable oil, emulsifiers, and milk fractions. The fat in these components is calculated into the amounts of fat in the composition unless otherwise indicated.

In the present context, ganache is a term that describes a rich and creamy topping made with chocolate and heavy cream. It can be used in the centres of truffles, as a glaze over cake, or it can be whipped for use as filling and/or frosting. Traditionally, a ganache is made by heating cream and adding bits of chocolate. The mixture is then stirred until it becomes smooth.

The frozen confection may be a portion, dome, bonbon, morsel, stick, or bar. It can be extruded or molded. The frozen confection may be provided with a stick for holding the product.

In a preferred embodiment of the invention, the hardening fat in addition to the optional milk fat comprises fat selected from the group consisting of palm oil, palm mid fractions, palm kernel oil, cocoa butter, coconut oil, or a combination thereof.

In a preferred embodiment of the invention the liquid oil is selected from the group consisting of rapeseed oil (canola oil), sunflower oil, safflower oil, soybean oil, corn oil, algal oil, palm olein, peanut oil, olive oil, tree nut or culinary nut oil, moringa oleifera, seed oil, avocado oil or a combination thereof. In the context of peanut-based coating, it is preferred that the oil is peanut oil.

The coating composition has a solid fat content (SFC) of 30 - 50 % at 0°C. To keep a soft texture while still being able to set fast a solid fat content at 0°C of between 30-50% is preferred. Above 50% the coating becomes brittle and snaps or cracks. Below 30% the coating does not set. The present invention provides the benefit.

In a preferred embodiment, the coating composition of the frozen confectionery of the invention comprises 40 - 60% fat, 15 - 30% non fat nut mass, and some seasoning such as salt and sugar to taste.)

The coating composition comprises 10 - 20 wt. % non-fat milk solids.

A preferred plastic viscosity of the coating composition has been found to be 100 to 700 centipoise (cps) (mPas) at 40°C. Below this value, the coating will be too thin, with a lower pick-up weight. With a thin coating, there would be a loss of desirable textural attributes.

Above the indicated plastics viscosity range "pin holes" or uneven coating are likely to occur on the products to be coated.

The melting point of the coating has been found to be important for the coating to set well and however at the same time it should not be too waxy when consumed. It is preferred that the coating composition has a melting point of 32 to 36 °C. Below that temperature, it will not set and have run down issues and with oily mouthfeel of the coating and above that temperature, it will have a waxy sensorial properties. Waxy texture occurs when melting point is above 36°C.

The fat-based coating composition may comprise 0.1 - 2 wt.% of emulsifiers. Preferably, the emulsifiers are selected from the group consisting of but not limited PGPR (Polyglycerol polyricinoleate), mono di glycerides, sunflower lecithin and soy lecithin or a combination thereof based on the weight of the coating composition.

Emulsifier can be used to further regulate the viscosity of the coating. If so, preferred emulsifiers are soy lecithin and/or sunflower lecithin/canola lecithin, as they are perceived as cleaner label.

PGPR can be used to impacts yield value, and will affect thickness if so desired. PGPR is not used in some instances because it is not perceived as clean label.

The fat blend used in the composition according to the invention has a saturated fat level of below 40%, which equates 16-22% SFA in the coating.

The invention also relates to a process for producing the coating composition described above. The process comprises the steps: providing whole ground nut, providing the non-fat solids, the hardening fat, and the liquid oil, melting the hardening fat, mixing non-fat solids with the at least part of the melted hardening fat and obtaining a mixture of fats, oils and non-fat solids, resulting in a paste, refining the mixture of fats, oils and non-fat solids by milling to reduce the particle size, preferably to a particle size below 80 microns, preferably below 40 to 15 microns, adding remaining fats and oils to the refined mixture and optionally adding emulsifier to the refined mixture and/or the mixture with fats and oils.

In an alternative process (not part of the invention), the non-fat solids can be pre-milled in a separate process-step (e.g. by the use of air-classifier mills). The pre-milling step can then fully or partly replace the refining of the mixture of fat and non-fat solids by milling to reduce the particle size.

In the present context particle size may be determined using the Malvern particle sizer, with medium chain triglyceride (MCT) oil as the dispersant. Particle size is analyzed at fraction less than 10 %, 50 %, 90 % and are calculated with the Malvern software based on the Mie theory. In the context of this application, the particle sizes are values at 90%. Equipment that may be used is a Chocolate Particle Size Analyzer, Malvern Mastersizer Micro with size range: 0.3 µm to 300 µm.

### Examples

### Example 1

### Sample Preparation:

Coating samples have been made by mixing the dry ingredients, the oils and emulsifiers to obtain a 5 kg batch. After mixing, the composition is ground in a mill (Royal Duyvis Wiener I-W-S; 8mm steel balls) at 45°C. When grinding is over, flavoring agent were added to the composition and the mixture stirred at 150 rpm for 30 minutes.

Samples with the following recipes were prepared.

| Soft, -non-setting coating | |
|---|---|
| | % |
| Sugar | 41.000 |
| Soya Bean Oil | 37.250 |
| Vegetable Fat Palm (Stearin) | 1.350 |
| Cocoa Powder | 20.000 |
| Lecithin | 0.400 |

| Brittle, fast-setting | |
|---|---|
| | % |
| Sugar | 31.000 |
| Coconut Oil | 50.000 |
| Canola Oil | 7.500 |
| Cocoa Powder | 11.000 |
| Lecithin | 0.500 |

| Soft peanut-butter coating | |
|---|---|
| | % |
| Peanut Whole Ground | 30.80 |
| Palm Oil | 25.40 |
| Sugar | 25.00 |
| Skimmed Milk Powder | 14.60 |
| Anhydrous Milk Fat | 2.80 |
| Fully Hydrogenated Vegetable Oil | 0.70 |
| Salt | 0.40 |
| Lecithin | 0.30 |

The solid fat content (SFC) of samples was measured on a DSC2500 (TA Instruments) equipment using Tzero hermetic pans with the following cycle: equilibrate at 20 °C, ramp 10 °C/min to 80 °C, isothermal 5 min, ramp 10 °C/min to -40 °C, isothermal 5 min, ramp 10 °C/min to 80 °C. The SFC computed on the thermogram of the second melt cycle. For reference, it was assumed that the SFC of the sample at -40 °C was 100% and that at 80 °C was 0%, and a running integral was calculated.

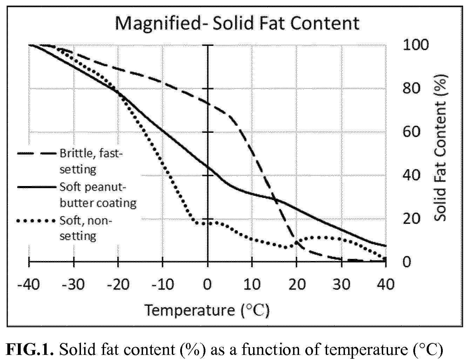

Figure 1 shows the SFC % as a function of temperature. As seen here, the SFC profile of a brittle snap-coating is drastically different than a soft non-setting coating, however the SFC profile of the soft peanut-butter coating according to the invention falls in between. This indicates that the coating according to the invention has a more solid matrix than a non-setting coating at frozen food temperatures, and is less solid than a regular fast-setting coating. The present invention of coating sets quickly in the -20 to 0 °C range which makes it technically feasible to apply to frozen confections. At 0 °C, the coating composition according to the invention has an SFC intermediate to the brittle and non-setting coating which was shown to be desirably soft yet structurally sound. Moreover, while warming up to ambient temperatures at the time of consumption, the intermediate solid fat levels keep the coating intact while providing a smoother mouthfeel.

The texture was measured using a TA.XT.plus texture profile analyser (Stable Micro Systems, UK). Samples were completely melted to erase crystal memory and then frozen in a 3 oz plastic sample cup for 8 hours at -22°C. Immediately prior to measurement, a sample was retrieved from the freezer and a single penetration test was conducted on the texture profile analyser with a 5mm diameter stainless steel probe from a distance of 15mm at 1 mm/s. The trigger force was set to 8 g.

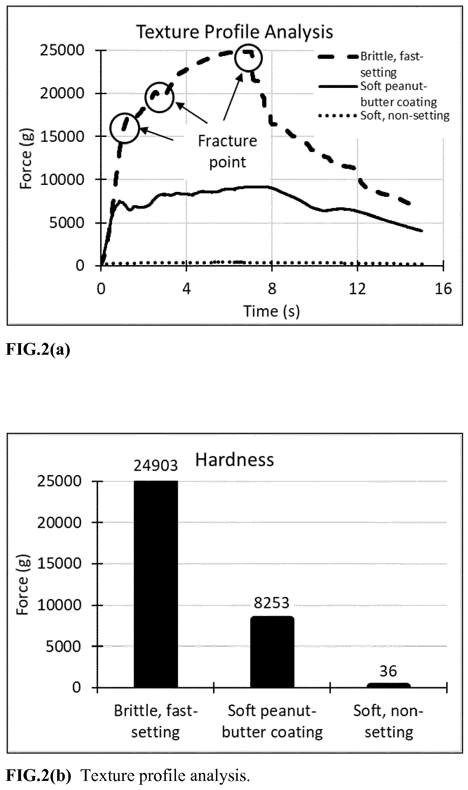

Figure 2(a) shows the texture profile as a function of test time. In Figure 2(a), the force (g) as a function of time in seconds is plotted and in Figure 2(b) the hardness or peak force value is shown.

As seen in this figure, the regular fast-setting snap coating can withstand higher forces before breaking whereas the soft peanut-butter and the non-setting coating do not fracture.

Furthermore, the soft peanut butter coating according to the invention is approx. one-third as hard as the regular snap-coating, and yet dramatically harder than a typical soft non-setting coating.

### Example 2

Example 2 uses the peanut butter coating according to the invention and compares the analytical data to another nut-butter coating that does not work as a coating on frozen confections. The coatings are prepared as indicated in Example 1.

| Soft peanut-butter coating | |
|---|---|
| | % |
| Peanut Whole Ground | 30.80 |
| Palm Oil | 25.40 |
| Sugar | 25.00 |
| Skimmed Milk Powder | 14.60 |
| Anhydrous Milk Fat | 2.80 |
| Fully Hydrogenated Vegetable Oil | 0.70 |
| Salt | 0.40 |
| Lecithin | 0.30 |

| Non-setting peanut-butter coating | |
|---|---|
| | % |
| Peanut Whole Ground | 31.07 |
| Soybean oil | 24.9 |
| Sugar | 25.69 |
| Skimmed Milk Powder | 14.80 |
| Anhydrous Milk Fat | 2.76 |
| Fully Hydrogenated Vegetable Oil | 0 |
| Salt | 0.46 |
| Lecithin | 0.32 |

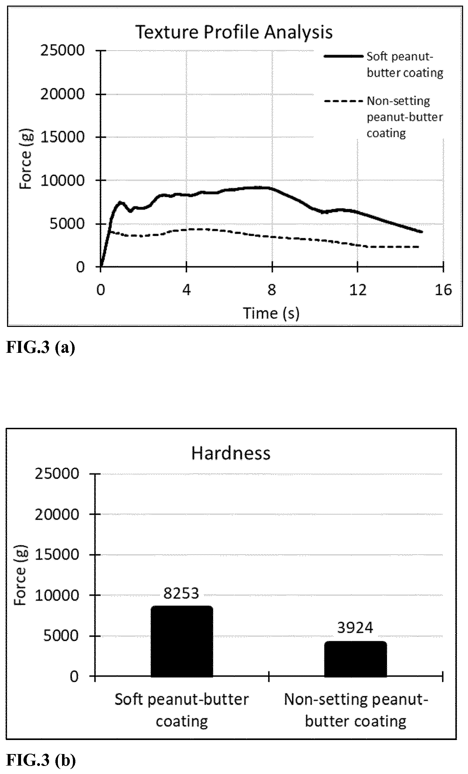

Figure 3(a) shows the texture profile with time in a single penetration test at -22°C. Figure 3(b) shows its peak hardness value (force, g) for fat-based coating according the invention compared with a coating containing nuts that does not set.

## Claims

1. A frozen confectionery comprising a coating having a coating composition comprising, expressed in weight % (based on the total weight of the coating),
40 - 60 wt. %, preferably 43 - 60 wt. %, more preferably 45 - 50 wt. % of total fat in the coating,
30 - 50 wt. % of ground whole nuts having a particle size below 80 microns, preferably 10 - 73 microns, and
wherein the total fat in the coating composition comprises 40 - 60 wt.% of liquid fat and 60 - 40 wt. % of hardening fat based on the total fat, the coating composition has a solid fat content of 30 - 50 % at 0°C and comprises 10 - 20 wt. % non-fat milk solids.

2. A frozen confectionery according to claim 1, wherein the ground whole nuts are providing 23 - 61 wt. % of the total fat in the coating composition and
77 - 39 wt. % of the total fat not originating from the ground whole nuts together with the fat from the ground nuts provides the total fat in the coating composition.

3. A frozen confectionery according to claims 1 or 2, wherein the total fat in the coating composition comprises 45 - 55 wt. % of the liquid fat and 55 - 45 wt. % of hardening fat based on the total fat.

4. A frozen confectionery according to any of the preceding claims, wherein the ground whole nuts provide 14 - 23 wt. % of nut oil based on the total coating weight.

5. A frozen confectionery according to any of the preceding claims, wherein the coating composition comprises 14 - 45 wt. % non-fat solids not coming from the nuts and 15-26 wt. % non-fat solids coming from the nuts based on the total coating weight.

6. A frozen confectionery according to any of the preceding claims, wherein the fat not originating from the ground nuts comprises 16 - 0 wt. % liquid oil and 30 - 20 wt. % of hardening fat based on total coating weight.

7. A frozen confectionery according to any of the preceding claims, wherein the fat in coating composition in addition to the fat from the ground whole nuts is combined with dairy fat, palm oil, coconut oil, palm mid fractions, palm kernel oil, cocoa butter, or a combination thereof.

8. A frozen confectionery according to any of the preceding claims, wherein the coating composition before it is frozen coating composition has a plastic viscosity of 100 to 700 centipoise (cps) (mPas) at 40°C.

9. A frozen confectionery according to any of the preceding claims, wherein the hardening fat in the coating composition comprises fat selected from the group consisting of milk fat, palm oil, palm oil mid fractions, palm kernel oil, coconut oil, cocoa butter or a combination thereof.

10. A frozen confectionery according to any of the preceding claims, wherein the liquid oil in the coating composition is selected from the group consisting of rapeseed oil (canola oil), sunflower oil, safflower oil, soybean oil, corn oil, algal oil, palm olein, peanut oil, olive oil, tree nut or culinary nut oil, moringa oleifera, seed oil,, avocado oil or a combination thereof.

11. A frozen confectionery according to any of the preceding claims, wherein the non-fat solids, not coming from the nuts in the coating composition, are selected from the group consisting of: sugar, salt, cocoa, fibers, milk solids non-fat and one or more flavors.

12. A frozen confectionery according to any of the preceding claims, wherein the coating composition comprises 0.1 - 2 wt.% of emulsifiers selected from the group consisting of PGPR, mono di glycerides, sunflower lecithin and soy lecithin or a combination thereof based on the weight of the coating composition.

13. A frozen confectionery according to any of the preceding claims, wherein the non-fat solids in the coating composition comprises 5-45 wt. % sugar.

14. A frozen confectionery according to any of the preceding claims, wherein the ground whole nuts are selected from the group consisting of peanuts, almonds, brazil nuts, cashews, hazel nuts, pecans, walnuts, macadamia nuts, pistachio, chest nuts, other culinary nuts, and mixtures thereof.

15. A process for producing a coating composition according to any of the preceding claims, wherein said process comprising the steps:
providing whole ground nut,
providing the non-fat solids, the hardening fat, and the liquid oil,
melting the hardening fat,
mixing non-fat solids with the at least part of the melted hardening fat and
obtaining a mixture of fats, oils and non-fat solids, resulting in a paste,
refining the mixture of fats, oils and non-fat solids by milling to reduce the particle size, preferably to a particle size below 80 microns, preferably below 40 to 15 microns
adding remaining fats and oils to the refined mixture and
optionally adding emulsifier to the refined mixture and/or the mixture with fats and oils.

## Patentansprüche

1. Gefrorene Süßware, umfassend einen Überzug, der eine Überzugszusammensetzung aufweist, umfassend, ausgedrückt in Gew.-% (basierend auf dem Gesamtgewicht des Überzugs),
zu 40-60 Gew.-%, vorzugsweise zu 43-60 Gew.-%, mehr bevorzugt zu 45-50 Gew.-% Gesamtfett in dem Überzug,
zu 30-50 Gew.-% gemahlene ganze Nüsse, die eine Teilchengröße unter 80 Mikrometer, vorzugsweise 10-73 Mikrometer, aufweisen und
wobei das Gesamtfett in der Überzugszusammensetzung zu 40-60 Gew.-% Flüssigfett und zu 60-40 Gew.-% Härtungsfett basierend auf dem Gesamtfett umfasst, die Überzugszusammensetzung bei 0 °C einen Festfettgehalt von zu 30-50 % aufweist und zu 10-20 Gew.-% fettfreie Milchfeststoffe umfasst.

2. Gefrorene Süßware nach Anspruch 1, wobei die gemahlenen ganzen Nüsse 23-61 Gew.-% des Gesamtfetts in der Überzugszusammensetzung bereitstellen und 77-39 Gew.-% des Gesamtfetts, das nicht aus den gemahlenen ganzen Nüssen stammt, zusammen mit dem Fett aus den gemahlenen Nüssen das Gesamtfett in der Überzugszusammensetzung bereitstellt.

3. Gefrorene Süßware nach Anspruch 1 oder 2, wobei das Gesamtfett in der Überzugszusammensetzung zu 45-55 Gew.-% Flüssigfett und zu 55-45 Gew.-% Härtungsfett basierend auf dem Gesamtfett umfasst.

4. Gefrorene Süßware nach einem der vorstehenden Ansprüche, wobei die gemahlenen ganzen Nüsse zu 14-23 Gew.-% Nussöl basierend auf dem Gesamtgewicht des Überzugs bereitstellen.

5. Gefrorene Süßware nach einem der vorstehenden Ansprüche, wobei die Überzugszusammensetzung zu 14-45 Gew.-% fettfreie Feststoffe, die nicht von den Nüssen kommen, und zu 15-26 Gew.-% fettfreie Feststoffe, die von den Nüssen kommen, basierend auf dem Gesamtgewicht des Überzugs umfasst.

6. Gefrorene Süßware nach einem der vorstehenden Ansprüche, wobei das Fett, das nicht aus den gemahlenen Nüssen stammt, zu 16-0 Gew.-% flüssiges Öl und zu 30-20 Gew.-% Härtungsfett basierend auf dem Gesamtgewicht des Überzugs umfasst.

7. Gefrorene Süßware nach einem der vorstehenden Ansprüche, wobei das Fett in der Überzugszusammensetzung zusätzlich zu dem Fett aus den gemahlenen ganzen Nüssen mit Milchfett, Palmöl, Kokosnussöl, Palmmittelraktionen, Palmkernöl, Kakaobutter oder einer Kombination davon kombiniert wird.

8. Gefrorene Süßware einem der vorstehenden Ansprüche, wobei die Überzugszusammensetzung, bevor sie eine gefrorene Überzugszusammensetzung ist, eine plastische Viskosität von 100 bis 700 Centipoise (cps) (mPas) bei 40 °C aufweist.

9. Gefrorene Süßware nach einem der vorstehenden Ansprüche, wobei das Härtungsfett in der Überzugszusammensetzung Fett umfasst, das aus der Gruppe ausgewählt ist, bestehend aus Milchfett, Palmöl, Palmölmittelfraktionen, Palmkernöl, Kokosnussöl, Kakaobutter oder einer Kombination davon.

10. Gefrorene Süßware nach einem der vorstehenden Ansprüche, wobei das flüssige Öl in der Überzugszusammensetzung aus der Gruppe ausgewählt ist, bestehend aus Rapsöl (Canolaöl), Sonnenblumenöl, Saflordistelöl, Sojaöl, Maisöl, Algenöl, Palmolein, Erdnussöl, Olivenöl, Baumnuss- oder Speisenussöl, Moringa oleifera, Samenöl, Avocadoöl oder einer Kombination davon.

11. Gefrorene Süßware nach einem der vorstehenden Ansprüche, wobei die fettfreien Feststoffe, die nicht aus den Nüssen in der Überzugszusammensetzung kommen, aus der Gruppe ausgewählt sind, bestehend aus Zucker, Salz, Kakao, Fasern, fettfreien Milchfeststoffen und einem oder mehreren aromatischen Geschmacksstoffen.

12. Gefrorene Süßware nach einem der vorstehenden Ansprüche, wobei die Überzugszusammensetzung zu 0,1-2 Gew.-% Emulgatoren umfasst, die aus der Gruppe ausgewählt sind, bestehend aus PGPR, Monodiglyceriden, Sonnenblumenlecithin und Sojalecithin oder einer Kombination davon basierend auf dem Gewicht der Überzugszusammensetzung.

13. Gefrorene Süßware nach einem der vorstehenden Ansprüche, wobei die fettfreien Feststoffe in der Überzugszusammensetzung zu 5-45 Gew.-% Zucker umfassen.

14. Gefrorene Süßware nach einem der vorstehenden Ansprüche, wobei die ganzen gemahlenen Nüsse aus der Gruppe ausgewählt ist, bestehend aus Erdnüssen, Mandeln, Paranüssen, Cashewnüssen, Haselnüssen, Pekannüssen, Walnüssen, Macadamianüssen, Pistazie, Esskastanien, anderen Speisenüssen und Mischungen davon.

15. Verfahren zum Produzieren einer Überzugszusammensetzung nach einem der vorstehenden Ansprüche, wobei das Verfahren die Schritte umfasst:
Bereitstellen von gemahlenen Nüssen,
Bereitstellen der fettfreien Feststoffe, des Härtungsfetts und des flüssigen Öls,
Schmelzen des Härtungsfetts,
Mischen von fettfreien Feststoffen mit mindestens einem Teil des geschmolzenen Härtungsfetts und Erhalten einer Mischung von Fetten, ölen und fettfreien Feststoffen, die eine Paste ergeben,
Verfeinern der Mischung aus Fetten, Ölen, und fettfreien Feststoffen durch Mahlen, um die Teilchengröße zu verringern, vorzugsweise auf eine Teilchengröße unter 80 Mikrometer, vorzugsweise unter 40 bis 15 Mikrometer,
Zugeben von verbleibendem Fetten und Ölen zu der verfeinerten Mischung und
optional Zugeben von Emulgator zu der verfeinerten Mischung und/oder der Mischung mit den Fetten und Ölen.

## Revendications

1. Confiserie congelée comprenant un enrobage ayant une composition d'enrobage, exprimée en % en poids (sur la base du poids total de l'enrobage) comprenant,
40 à 60 % en poids, de préférence 43 à 60 % en poids, plus préférablement 45 à 50 % en poids de matière grasse totale dans l'enrobage,
30 à 50 % en poids de fruits à coque entiers moulus dont la taille de particules est inférieure à 80 microns, de préférence 10 à 73 microns, et
dans laquelle la matière grasse totale dans la composition d'enrobage comprend 40 à 60 % en poids de matière grasse liquide et 60 à 40 % en poids de matière grasse de durcissement sur la base de la matière grasse totale, la composition d'enrobage a une teneur en matière grasse solide de 30 à 50 % à 0 °C et comprend 10 à 20 % en poids de solides non gras du lait.

2. Confiserie congelée selon la revendication 1, dans laquelle les fruits à coque entiers moulus fournissent de 23 à 61 % en poids de la matière grasse totale dans la composition d'enrobage et
77 à 39 % en poids de la matière grasse totale ne provenant pas des fruits à coque entiers moulus et de la matière grasse provenant des fruits à coque moulus fournissent la matière grasse totale de la composition d'enrobage.

3. Confiserie congelée selon les revendications 1 ou 2, dans laquelle la matière grasse totale dans la composition d'enrobage comprend 45 à 55 % en poids de la matière grasse liquide et 55 à 45 % en poids de la matière grasse de durcissement sur la base de la matière grasse totale.

4. Confiserie congelée selon l'une des revendications précédentes, dans laquelle les fruits à coque entiers moulus fournissent de 14 à 23 % en poids d'huile de noisette en fonction du poids total de l'enrobage.

5. Confiserie congelée selon l'une des revendications précédentes, dans laquelle la composition d'enrobage comprend 14 à 45 % en poids de solides non gras ne provenant pas des fruits à coque et 15 à 26 % en poids de solides non gras provenant des fruits à coque en fonction du poids total de l'enrobage.

6. Confiserie congelée selon l'une des revendications précédentes, dans laquelle la matière grasse ne provenant pas des fruits à coque moulus comprend 16 à 0 % en poids d'huile liquide et 30 à 20 % en poids de matière grasse de durcissement en fonction du poids total de l'enrobage.

7. Confiserie congelée selon l'une des revendications précédentes, dans laquelle la matière grasse dans la composition d'enrobage, en plus de la matière grasse des fruits à coque entiers moulus, est combinée avec de la matière grasse d'origine laitière, de l'huile de palme, de l'huile de noix de coco, des fractions intermédiaires de l'huile de palme, de l'huile de palmiste, du beurre de cacao ou une combinaison de ceux-ci.

8. Composition congelée selon l'une des revendications précédentes, dans laquelle la composition d'enrobage avant qu'elle ne soit une composition congelée a une viscosité plastique de 100 à 700 centipoise (cP) (mPas) à 40 °C.

9. Confiserie congelée selon l'une des revendications précédentes, dans laquelle la matière grasse de durcissement dans la composition d'enrobage comprend une matière grasse choisie dans le groupe constitué par la matière grasse de lait, l'huile de palme, les fractions intermédiaires de l'huile de palme, l'huile de palmiste, l'huile de noix de coco, le beurre de cacao ou une combinaison de ceux-ci.

10. Confiserie congelée selon l'une des revendications précédentes, dans laquelle l'huile liquide dans la composition d'enrobage est choisie dans le groupe constitué par l'huile de colza (huile de canola), l'huile de tournesol, l'huile de carthame, l'huile de soja, l'huile de maïs, l'huile d'algues, l'oléine de palme, l'huile d'arachide, l'huile d'olive, l'huile de fruit à coque ou de fruit à coque culinaire, l'huile de graine de moringa oleifera, l'huile d'avocat ou une combinaison de celles-ci.

11. Confiserie congelée selon l'une des revendications précédentes, dans laquelle les solides non gras, ne provenant pas des fruits à coque dans la composition d'enrobage, sont choisis dans le groupe constitué par le sucre, le sel, le cacao, les fibres, les solides non gras du lait et un ou plusieurs arômes.

12. Confiserie congelée selon l'une des revendications précédentes, dans laquelle la composition d'enrobage comprend 0,1 à 2 % en poids d'émulsifiants choisis dans le groupe constitué par les PGPR, les mono di glycérides, la lécithine de tournesol et la lécithine de soja ou une combinaison de ceux-ci, en fonction du poids de la composition d'enrobage.

13. Confiserie congelée selon l'une des revendications précédentes, dans laquelle les solides non gras dans la composition d'enrobage comprennent 5 à 45 % en poids de sucre.

14. Procédé selon l'une quelconque des revendications précédentes, dans lequel les fruits à coque sont choisis dans le groupe constitué de cacahuètes, d'amandes, de noix du Brésil, de noix de cajou, de noisettes, de noix de pécan, de noix, de noix de macadémia, de pistaches, de châtaignes, d'autres fruits à coque culinaires, et des mélanges de ceux-ci.

15. Procédé de production d'une composition d'enrobage selon l'une quelconque des revendications précédentes, dans lequel ledit procédé comprend les étapes consistant à :
fournir des fruits à coque entiers moulus,
fournir les matières solides non grasses et la matière grasse de durcissement et l'huile liquide,
faire fondre la matière grasse de durcissement,
mélanger les matières solides non grasses avec l'au moins une portion de la matière grasse fondue et obtenir un mélange de matière grasse et de matières solides non grasses,
raffiner le mélange de matières grasses, d'huiles et de matières solides non grasses par mouture pour réduire la taille de particule, de préférence à une taille de particule inférieure à 48 microns, de préférence inférieure à 40 à 15 microns.
ajouter les matières grasses restantes au mélange raffiné et
éventuellement ajouter un émulsifiant au mélange raffiné et/ou au mélange de matières grasses et d'huiles.
